# EUROPÄISCHE PATENTSCHRIFT

(11) **EP 3 709 929 B1**
(45) Veröffentlichungstag und Bekanntmachung des Hinweises auf die Patenterteilung: **20.10.2021**
(21) Anmeldenummer: 18806972.8
(22) Anmeldetag: 24.10.2018
(51) Int. Cl.: A61C 15/02, A46B 1/00

(54) **INTERDENTALREINIGER**
INTERDENTAL CLEANER
DISPOSITIF DE NETTOYAGE DE L'ESPACE INTERDENTAIRE

(30) Priorität: 15.11.2017 DE 102017010561
(43) Veröffentlichungstag der Anmeldung: 23.09.2020
(73) Patentinhaber: Sunstar Suisse S.A., 1163 Etoy (CH)
(72) Erfinder: BUTZ, Jürgen, 79677 Schönau (DE); PÖTSCH, Gerhard, 79108 Freiburg (DE)
(74) Vertreter: Lichti - Patentanwälte Partnerschaft mbB
(86) Internationale Anmeldenummer: PCT/EP2018/000485
(87) Internationale Veröffentlichungsnummer: WO 2019/096434

(56) Entgegenhaltungen:
- WO-A1-2014/023424
- DE-A1- 19 642 431
- DE-A1-102011 101 391
- DE-A1-102012 015 663
- DE-A1-102014 011 405
- DE-A1-102016 005 012

## Beschreibung

Die Erfindung betrifft einen Interdentalreiniger gemäß dem Oberbegriff des Anspruchs 1.

Ein Interdentalreiniger des genannten Aufbaus ist aus der DE 10 2012 015 663 A1 bekannt und besitzt einen stabförmigen Träger aus einen formstabilen Kunststoff, der an seinem einen Ende mit einem beispielsweise plattenförmigen Handgriffteil versehen ist. Das Handgriffteil kann einstückig angeformt oder nachträglich an den Träger angesetzt sein.

In dem dem Handgriffteil abgewandten vorderen Endbereich des stabförmigen Trägers ist auf diesem ein hülsenförmiger Überzug aus einem weich-elastischen Kunststoff, beispielsweise einem thermoplastischen Elastomer angeordnet und insbesondere aufgespritzt. Der Überzug trägt radial nach außen hervorstehende Reinigungselemente, bei denen es sich um einstückig angeformte, radial auskragende Finger und/oder um eingebettete, vorgefertigte Borsten eines Monofils handeln kann.

In der vorliegenden Beschreibung bezieht sich der Begriff "axial" auf die Längsachse des stabförmigen Trägers und des Interdentalreinigers und der Begriff "radial" beschreibt eine Richtung, die senkrecht zur Längsachse des stabförmigen Trägers verläuft. Das Handgriffteil befindet sich am hinteren Ende des Trägers und das Reinigungsteil bzw. der Überzug sind am vorderen Ende des Trägers angeordnet.

Zum Reinigen der Zahnzwischenräume ergreift ein Benutzer den Interdentalreiniger am Handgriffabschnitt und führt das entgegengesetzte vordere Ende bzw. das Reinigungsteil mit dem Überzug in die Zahnzwischenräume ein, wobei die hervorstehenden Reinigungselemente die Zahnzwischenräume reinigen. Dabei muss das Material des Überzugs unterschiedliche Anforderungen erfüllen. Einerseits muss das Material des Überzugs weich genug sein, um zu verhindern, dass bei einem fehlerhaften oder ungenauen Einführen des Interdentalreinigers in einen Zahnzwischenraum eine Beschädigung oder Verletzung des Zahnfleisches auftritt. Aus diesem Grunde sollte der Überzug möglichst weich ausgebildet sein.

Andererseits ist es notwendig, dass der Überzug auch festsitzende Verunreinigungen in den Zahnzwischenräumen zuverlässig löst. Dazu sollte der Überzug relativ hart ausgebildet sein. Es hat sich gezeigt, dass es schwierig ist, den Überzug an diese unterschiedlichen Anforderungen anzupassen und gleichzeitig sowohl Verletzungen des Zahnfleisches zu vermeiden als auch eine gute Reinigungswirkung sicherzustellen.

Der Erfindung liegt die Aufgabe zugrunde, einen Interdentalreiniger der genannten Art zu schaffen, bei dem sowohl eine Verletzung des Zahnfleisches vermieden als auch eine gute Reinigung des Zahnzwischenraumes erreicht werden kann.

Diese Aufgabe wird durch einen Interdentalreiniger mit den Merkmalen des Anspruchs 1 gelöst. Dabei ist vorgesehen, dass der Überzug aus mehreren Überzugsteilen aus unterschiedlichen Materialien besteht. Ein 1. Überzugsteil besteht aus einem 1. weich-elastischen Kunststoff und ein 2. Überzugsteil besteht aus einem 2. weich-elastischen Kunststoff oder aus einem thermoplastischen Kunststoff. Das Kunststoff-Material des 1. Überzugsteils ist dabei unterschiedlich zu dem Kunststoff-Material des 2. Überzugsteils. Aufgrund des Vorhandenseins von mehreren Überzugsteilen aus unterschiedlichen Kunststoff-Materialien ist es möglich, die Materialien an den gewünschten Verwendungszweck anzupassen. Beispielsweise kann vorgesehen sein, dass im vorderen Endbereich des Trägers, d.h. an dem vorderen Ende des Interdentalreinigers, mit dem er in einen Zahnzwischenraum eingeführt wird, ein sehr weiches Kunststoff-Material und insbesondere ein thermoplastisches Elastomer oder ein Silikon angeordnet ist. Auf diese Weise ist erreicht, dass bei einem fehlerhaften Einführen des Interdentalreinigers in den Zahnzwischenraum das Verletzungsrisiko für das Zahnfleisch verringert ist.

Vorzugsweise ist in einem weiteren Bereich, der einen axialen Abstand vom vorderen Ende des Trägers aufweist, ein etwas härteres Kunststoff-Material verwendet, das sicherstellt, dass der Zahnzwischenraum auch von groben, festsitzende Verunreinigungen gereinigt wird, nachdem der Interdentalreiniger ordnungsgemäß in den Zahnzwischenraum eingeführt wurde.

In einer möglichen Ausgestaltung kann vorgesehen sein, dass sowohl das Material des 1. Überzugsteils als auch das Material des 2. Überzugsteils ein weich-elastischer Kunststoff und insbesondere ein thermoplastisches Elastomer oder Silikon. Vorzugsweise ist vorgesehen, dass das Kunststoff-Material des 1. Überzugsteils und das Kunststoff-Material des 2. Überzugsteils unterschiedliche Shore-Härten besitzen, wobei das Kunststoff-Material des 1. Überzugteils vorzugsweise eine geringe Shore-Härte als das Kunststoff-Material des 2. Überzugsteils aufweist.

Wenn das 2. Überzugsteil aus einem thermoplastischen Kunststoff hergestellt ist, ergibt sich die Weichheit und Flexibilität der abstehenden Reinigungselemente, insbesondere der angeformten Finger, weniger durch die Eigenschaften des Materials als durch die Formgebung der Finger. Vorzugsweise werden die Finger dabei relativ dünn, d.h. mit einem Durchmesser im Bereich von 0,02mm bis 0,2mm und insbesondere im Bereich von 0,07mm bis 0,15mm ausgebildet und besitzen beispielsweise einen Durchmesser von 0,1mm. Aufgrund der filigranen Ausgestaltung der Finger des 2. Überzugsteils ist es möglich, eine sehr viel größere Anzahl an Reinigungselementen bzw. Fingern anzuordnen und die Reinigungselemente bzw. Finger verglichen mit dem 1. Überzugsteil wesentlich dichter anzuordnen.

Der Träger besteht vorzugsweise aus einem Kunststoff, der unterschiedlich zu den weich-elastischen Kunststoffen des 1. Überzugteils und des 2. Überzugsteils ist. Somit besteht der Interdentalreiniger aus zumindest drei KunststoffKomponenten, die vorzugsweise nacheinander in einem MehrKomponenten-Spritzgussverfahren gespritzt werden. Alternativ ist es möglich, den Träger in einem 1. Schritt auszubilden und in einem nachfolgenden 2. Schritt die Kunststoff-Materialien zur Bildung des 1. Überzugsteils und des 2. Überzugsteils gleichzeitig aufzuspritzen.

Das 1. Überzugsteil und das 2. Überzugsteil können direkt aneinanderstoßen, in bevorzugter Ausgestaltung der Erfindung ist jedoch vorgesehen, dass zwischen dem 1. Überzugsteil und dem 2. Überzugsteil zumindest abschnittsweise eine Nut ausgebildet ist. In die Nut kann ein Zusatzstoff, beispielsweise ein Farbstoff oder ein Geschmacksstoff oder ein medizinischer Wirkstoff, beispielsweise ein Desinfektionsmittel eingebracht sein.

Die Nut oder die Nuten können aufgrund ihrer radial äußeren Nutkanten zusätzliche Reinigungsflächen für die Zähne oder die Zahnzwischenräume bilden. Um dies zu erreichen, kann in Weiterbildung der Erfindung vorgesehen sein, dass die Nut insbesondere an ihrer radial äußeren Öffnung eine Breite im Bereich von 0,05mm bis 1,0mm und insbesondere im Bereich von 0,1mm bis 0,5mm aufweist.

Vorzugsweise reicht die Nut in ihrer Tiefe bis auf den Träger hinab, d.h. die Oberfläche des Trägers bildet den Nutboden.

In einer 1. möglichen Ausgestaltung der Erfindung ist vorgesehen, dass das 1. Überzugsteil im vorderen Endbereich des Trägers angeordnet ist und dass das 2. Überzugsteil relativ dazu in Richtung des Handgriffteils axial versetzt auf den Träger angeordnet ist. Bei dem 1. Überzugsteil kann es sich in diesem Fall um eine rohrförmige Hülse handeln, die an ihrem vorderen Ende, d.h. im Bereich der vorderen Spitze des Trägers, verschlossen sein kann. Das 2. Überzugsteil kann als rohrförmige Hülse ausgebildet sein, die auf dem Träger sitzt und diesen umgibt. Die zwischen dem 1. Überzugsteil und dem 2. Überzugsteil gebildete Nut verläuft vorzugsweise über den gesamten Umfang des Trägers.

In einer weiteren Ausgestaltung der Erfindung kann vorgesehen sein, dass das 1. Überzugsteil und das 2. Überzugsteil nicht als eine den Träger vollständig umgreifende Hülse, sondern lediglich als Teilschale oder Halbschale, d.h. als Halbrohr oder als Halbhülse, ausgebildet sind. Die Teilschale oder Halbschale umgreift den Träger nur auf einen Teil seines Umfangs, wobei die beiden Überzugsteile im Zusammenwirken den Träger bis auf die zwischen ihm gegebenenfalls gebildeten Nut vollständig umgreifen können.

In bevorzugter Ausgestaltung der Erfindung kann dabei vorgesehen sein, dass das 1. Überzugsteil eine Längsseite der axialen Länge des vorderen Abschnitts des Trägers abdeckt, während das 2. Überzugsteile eine dazu diametral entgegengesetzte Längsseite der axialen Länge des vorderen Abschnitts des Trägers abdeckt. Somit bilden die beiden Überzugsteile im Zusammenwirken einen hülsenförmigen Überzug.

Zwischen den beiden Überzugsteilen kann eine sich in Längsrichtung des Trägers erstreckende Nut ausgebildet sein. Die Nut kann gradlinig oder auch in Form einer Schlangenlinie verlaufen.

In einer möglichen Ausgestaltung der Erfindung kann vorgesehen sein, dass die Nut von einer an dem Träger ausgebildeten Rippe ausgefüllt ist, wodurch dem Interdentalreiniger eine höhere Festigkeit verliehen ist.

Beim vorgenannten Ausführungsbeispiel liegt das 1. Überzugsteil auf einer Längsseite der axialen Länge des vorderen Abschnitts des Trägers, beispielsweise auf der rechten Seite des vorderen Abschnitts des Trägers an, während das 2. Überzugseil auf der dazu diametral entgegengesetzten Längsseite, beispielsweise auf der linken Seite des Trägers anliegt. Dazu können die Überzugsteile als gradlinige Halbschale oder Teilschale ausgebildet sein.

In alternativer Ausgestaltung der Erfindung kann vorgesehen sein, dass jedes Überzugsteil aus zwei Teilschalen- oder Halbschalenabschnitten besteht, die um 180° um die Längsachse versetzt voneinander angeordnet sind. Dabei kann vorgesehen sein, dass das 1. Überzugsteil im vorderen Endbereich des Trägers eine Längsseite des Trägers und in einem zum vorderen Endbereich in Richtung des Handgriffteils axial versetzten Bereich die diametral entgegengesetzte Längsseite des Trägers abdeckt. Beispielsweise kann das 1. Überzugsteil im vorderen Endbereich des Trägers dessen rechte Längsseite und in einem axial dazu in Richtung des Handgriffs versetzten Abschnitt des Trägers dessen linke Längsseite abdecken. Entsprechend kann das 2. Überzugsteil jeweils die zum 1. Überzugsteil diametral entgegengesetzte Längsseiten des Trägers abdecken.

In einer weiteren alternativen Ausgestaltung der Erfindung kann vorgesehen sein, dass das 1. Überzugsteil und das 2. Überzugsteil jeweils als eine um den Träger herumlaufende Wendel ausgebildet sind. Dabei kann vorgesehen sein, dass die beiden Überzugsteile um eine halbe Ganghöhe der Wendeln versetzt zusammengesetzt sind. Auf diese Weise bilden die beiden Wendeln einen hülsenförmigen Überzug des Trägers. Die beiden Wendeln besitzen dabei die gleiche Ganghöhe, so dass die Zwischenräume der einen Wendel durch die anderen Wendel entweder vollständig oder zumindest überwiegend ausgefüllt sind. Wenn zwischen den beiden Wendeln ein axialer Abstand besteht, ist eine wendelartig umlaufende Nut gebildet, die in genannter Weise mit einem Zusatzstoff gefüllt sein kann. Die radial äußeren Nutkanten bilden dabei zusätzliche Kontaktflächen für die Zähne oder das Zahnfleisch, so dass eine erhöhte Reinigungsleistung gegeben ist.

In weiterer alternativer Ausbildung der Erfindung kann vorgesehen sein, dass das Reinigungsteil mehrere in axialer Richtung des Trägers bzw. aneinander liegende Reinigungsteilabschnitte aufweist, wobei vorzugsweise vorgesehen ist, dass ein 1. Reinigungsteilabschnitt alleine von dem 1. Überzugsteil, ein 2. Reinigungsteilabschnitt im Zusammenwirken von dem 1. Überzugsteil und dem 2. Überzugsteil und ein 3. Reinigungsteilabschnitt alleine von dem 2. Überzugsteil gebildet ist. Dabei kann vorgesehen sein, dass das 1. Überzugsteil eine hülsenartige Kappe, die den vorderen Endbereich des Trägers abdeckt, und einen daran angeformte, als eine um den Träger herumlaufende Wendel ausgebildeten Bereich besitzt. Das 2. Überzugsteil kann eine rohrförmige Hülse und einen daran angeformten, als eine um den Träger herumlaufende Wendel ausgebildeten Abschnitt aufweisen. Die beiden Wendeln können um eine halbe Ganghöhe zueinander versetzt zusammengesetzt sein, so dass der 2. Reinigungsteilabschnitt von den beiden Wendeln der beiden Überzugsteile gebildet ist. Auf diese Weise sind längs des Trägers drei aufeinanderfolgende Reinigungsteilabschnitte gebildet, die eine unterschiedliche Reinigungswirkung besitzen. Der vordere 1. Reinigungsteilabschnitt, der alleine von dem 1. Überzugseil gebildet ist, besitzt eine relativ weiche Ausgestaltung. Der sich in Richtung des Handgriffteils anschließende 2. Reinigungsteilabschnitt stellt eine Kombination der beiden Wendeln des 1. Überzugteils und des 2. Überzugteils dar, während sich der daran anschließende 3. Reinigungsteilabschnitt alleine aus dem 2. Überzugsteil ergibt. Zwischen den genannten Reinigungsteilabschnitten ergibt sich in funktionaler Hinsicht ein abgestufter Übergang hinsichtlich der Weichheit und Steifigkeit.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine perspektivische Aufsicht auf einen Interdentalreiniger gemäß einer 1. Ausführungsform der Erfindung,
- Fig. 2: eine Explosionsdarstellung der Bauteile des Interdentalreinigers gemäß Figur 1,
- Fig. 3: eine Aufsicht auf einen Interdentalreiniger gemäß einer 2. Ausführungsform der Erfindung,
- Fig. 4: eine perspektivische Ansicht des Interdentalreinigers gemäß Figur 3,
- Fig. 5: eine Explosionsdarstellung der Bauteile des Interdentalreinigers gemäß Figur 4,
- Fig. 6: eine Aufsicht auf einen Interdentalreiniger gemäß einer 3. Ausführungsform der Erfindung,
- Fig. 7: eine perspektivische Ansicht des Interdentalreinigers gemäß Figur 6,
- Fig. 8: eine Explosionsdarstellung der Bauteile des Interdentalreinigers gemäß Figur 7,
- Fig. 9: eine Aufsicht auf einen Interdentalreiniger gemäß einer 4. Ausführungsform der Erfindung,
- Fig. 10: eine perspektivische Ansicht des Interdentalreinigers gemäß Figur 9,
- Fig. 11: eine Explosionsdarstellung der Bauteile des Interdentalreinigers gemäß Figur 10,
- Fig. 12: eine Aufsicht auf einen Interdentalreiniger gemäß einer 5. Ausführungsform der Erfindung
- Fig. 13: eine perspektivische Ansicht des Interdentalreinigers gemäß Figur 12 und
- Fig. 14: eine Explosionsdarstellung der Bauteile des Interdentalreinigers gemäß Figur 13.

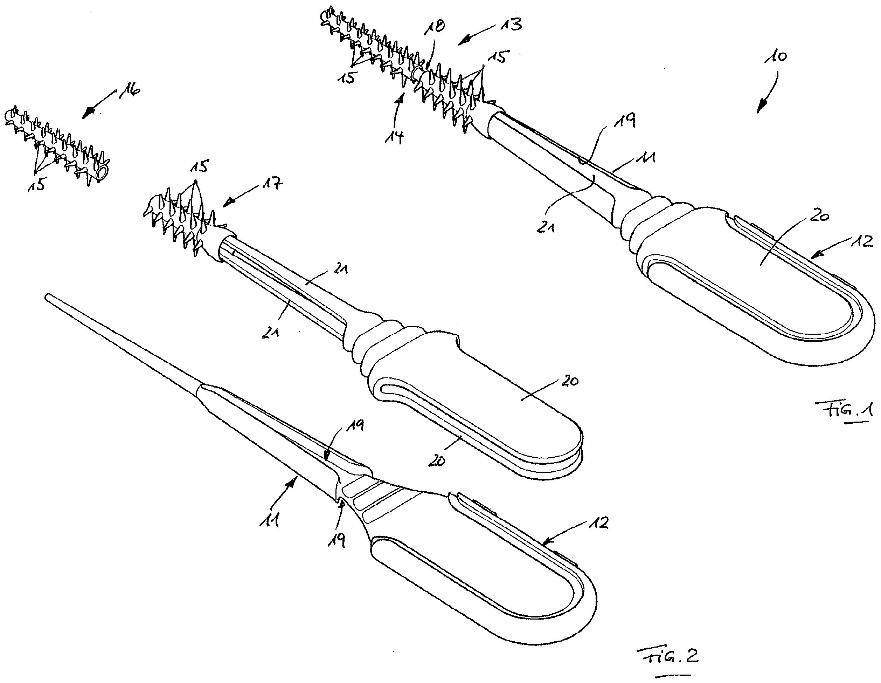

Figur 1 zeigt eine perspektivische Darstellung eines Interdentalreinigers 10, der einen stabförmigen Träger 11 aus einem formstabilen Kunststoff aufweist, an den an dem hinteren Ende ein plattenförmiges Handgriffteil 12 einstückig angeformt ist.

Am entgegengesetzten vorderen Ende ist an dem Träger 11 ein Reinigungsteil 13 angebracht. Das Reinigungsteil 13 besitzt einen hülsenförmigen Überzug 14, der zweiteilig aufgebaut ist und aus einem vorderen 1. Überzugsteil 16 und einem 2. hinteren Überzugsteil 17 besteht. Das 1. Überzugsteil 16 ist als Hülse ausgestaltet, die an ihrem vorderen Ende verschlossen ist, und trägt auf seiner Außenseite eine Vielzahl von radial hervorstehenden Reinigungselementen 15 in Form von einstückig angeformten Fingern. Das 1. Überzugsteil 16 besteht aus einem 1. weich-elastischen Kunststoff, beispielsweise einem thermoplastischen Elastomer.

Das 2. Überzugsteil 17 ist als rohrförmige Hülse ausgestaltet und besteht aus einem 2. weich-elastischen Kunststoff, beispielsweise einem thermoplastischen Elastomer. Es trägt auf seiner Außenseite ebenfalls radial nach außen hervorstehende Reinigungselemente 15 in Form von einstückig angeformten Fingern.

Wie insbesondere Figur 2 zeigt, besitzt der stabförmige Träger 11 in seinem mittleren Abschnitt zwischen dem Handgriffteil 12 und dem Reinigungsteil 13 zwei sich in Längsrichtung des Trägers erstreckende Kanäle 19, die mit dem 2. weich-elastischen Kunststoff gefüllt sind. Das Handgriffteil 12 ist beidseitig mit einer Auflage 20 aus dem 2. weich-elastischen Kunststoff versehen, die über Verbindungsstege 21, die in den Kanälen 19 angeordnet sind, mit dem 2. Überzugsteil 17 verbunden sind. Auf diese Weise sind das 2. Überzugsteil 17, die Verbindungsstege 21 und die Auflagen 20 als einstückiges Kunststoffteil ausgestaltet.

Das vordere 1. Überzugsteil 16 und das dahinterliegende 2. Überzugsteil 17 sind mit einem axialen Versatz angeordnet, so dass zwischen den beiden Überzugsteilen 16 und 17 eine umlaufende Nut 18 gebildet ist. Diese Nut 18 kann mit eine Zusatzstoff, beispielsweise einem Geschmacksstoff oder einem medizinischen Wirkstoff gefüllt sein.

Der 1. weich-elastische Kunststoff des 1. Überzugsteils 16 und der 2. weich-elastische Kunststoff des 2. Überzugteils 17 besitzen unterschiedliche Shore-Härten, wobei der 1. weich-elastische Kunststoff eine geringere Shore-Härte als der 2. weich-elastische Kunststoff aufweisen kann.

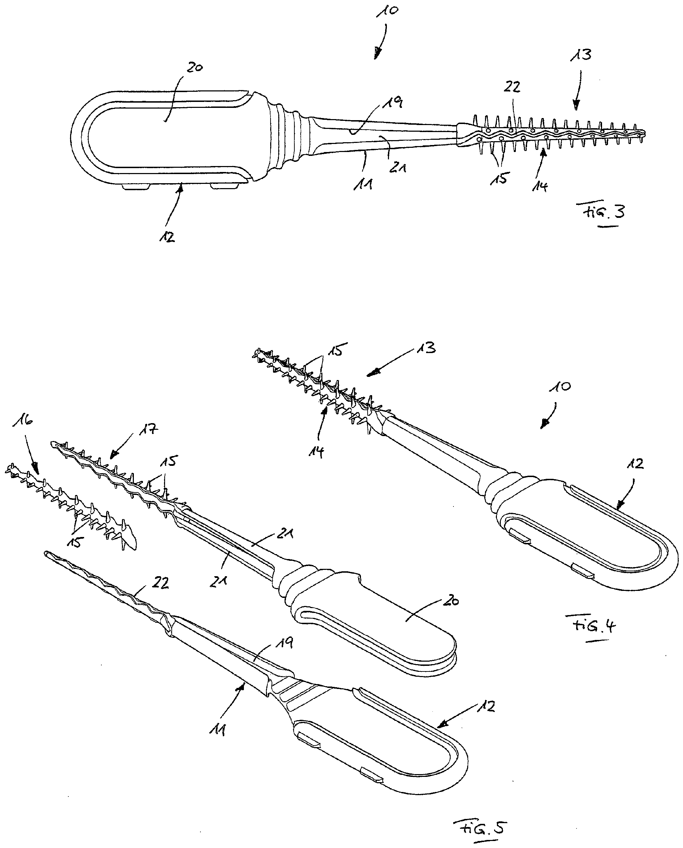

Die Figuren 3 bis 5 zeigen eine alternative Ausgestaltung des Interdentalreinigers 10, die sich von der vorgenannten Ausgestaltung des Interdentalreinigers 10 lediglich in der Ausbildung und Anordnung der beiden Überzugsteile 16 und 17 unterscheidet. Wie insbesondere die Figur 5 zeigt, sind das 1. Überzugsteil 16 und das 2. Überzugsteil 17 jeweils als eine sich in Längsrichtung des Trägers 11 erstreckende Teilschale oder Halbschale in Form eines in Längsrichtung unterteilten Halbrohres oder eine Halbhülse ausgebildet. Das 1. Überzugsteil 16 bedeckt eine Längsseite der axialen Länge des vorderen Abschnitts des Trägers 11 (die linke Längsseite gemäß Fig. 4), während das 2. Überzugsteil eine dazu diametral entgegengesetzte, gemäß Fig. 4 rechte Längsseite der axialen Länge des vorderen Abschnitts des Trägers 11 abdeckt. Im Zusammenwirken bilden die beiden Überzugsteile 16 und 17 den hülsenförmigen Überzug 14, wobei zwischen den beiden Überzugsteilen 16 und 17 eine Trennwand 22 vorgesehen ist, die einstückig an dem Träger 11 ausgebildet ist und sich in einer Schlangenlinie längs des Trägers 11 bis zu dessen vorderen Ende erstreckt.

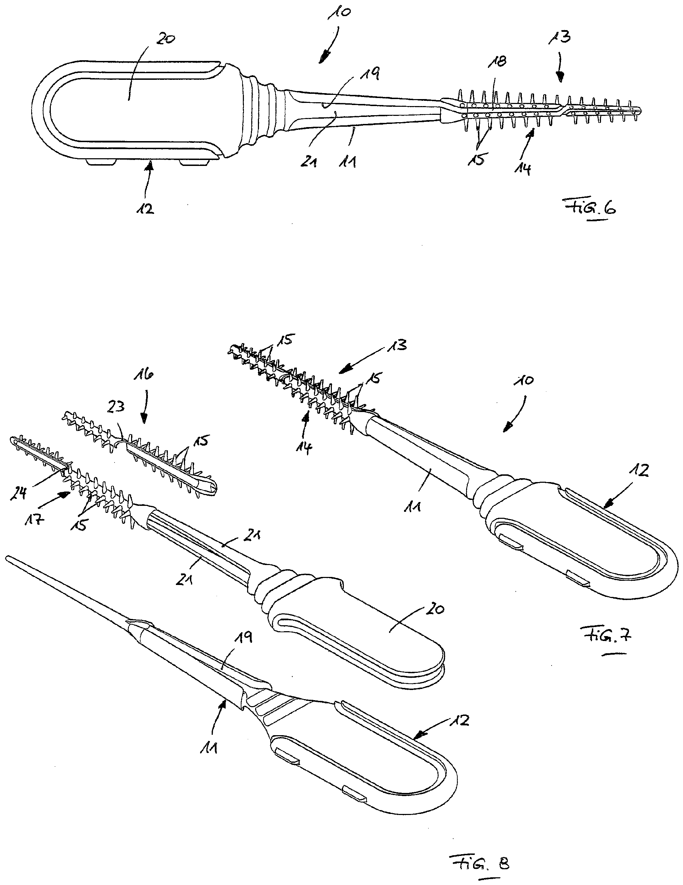

Die Figuren 6 bis 8 zeigen eine Weiterbildung der Ausgestaltung gemäß den Figuren 3 bis 5. Hierbei ist im Unterschied dazu vorgesehen, dass das 1. Überzugsteil 16 im vorderen Endbereich des Trägers 11 eine gemäß Figur 7 linke Längsseite des Trägers 11 abdeckt und in einem zum vorderen Endbereich des Trägers 11 in Richtung des Handgriffteils 12 axial versetzten Bereich die diametral entgegengesetzte, gemäß Figur 7 rechte Längsseite des Trägers 11 abdeckt. Das 1. Überzugsteil 16 besteht somit aus zwei teilschalenförmigen oder halbschalenförmigen Abschnitten, die über einen Steg 23 miteinander verbunden sind.

Das 2. Überzugsteil 17 deckt jeweils die zum 1. Überzugsteil 16 diametral entgegengesetzten Längsseiten des Trägers 11 ab. Gemäß den Figuren 6 bis 8 besitzt das 2. Überzugsteil 17 eine vordere Halbschale, die im vorderen Endbereich des Trägers 11 eine gemäß Figur 7 rechte Längsseite des Trägers 11 abdeckt, und eine weitre Halbschale, die in dem zum vorderen Endbereich in Richtung des Handgriffteils 12 axial versetzten Bereich die diametral entgegengesetzte, gemäß Figur 7 linke Längsseite des Trägers 11 abdeckt. Auch die beiden teilschalenförmigen oder halbschalenförmigen Bereiche des 2. Überzugteils 17 sind über einen Steg 24 einstückig miteinander verbunden.

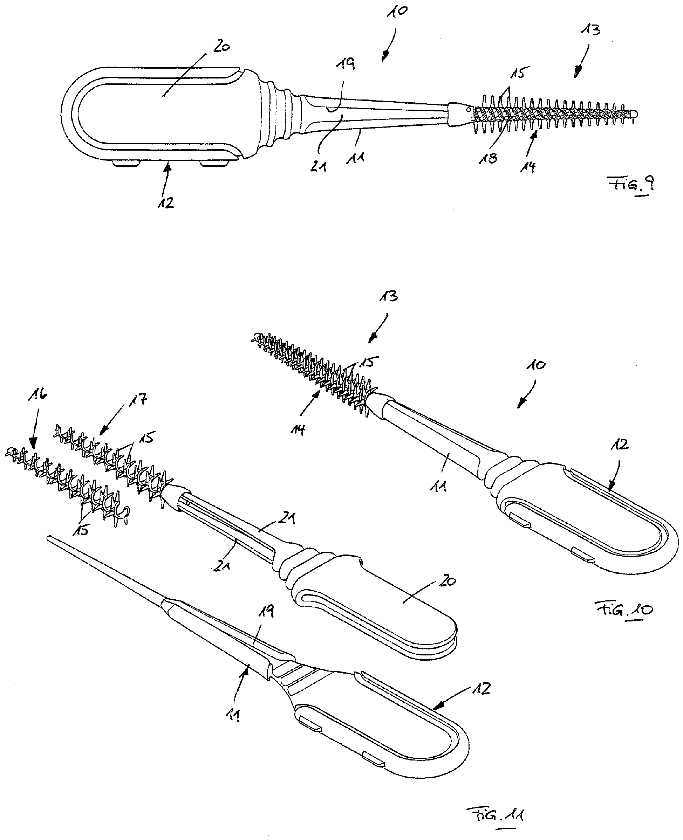

Die Figuren 9, 10 und 11 zeigen ein Ausführungsbeispiel des Interdentalreinigers 10, bei dem die beiden Überzugsteile 16 und 17 nicht in Axialrichtung hintereinander oder nebeneinander angeordnet sind, sondern ineinandergreifen. Zu diesem Zweck sind das 1. Überzugsteil 16 und das 2. Überzugsteil 17 jeweils als eine um den Träger 11 herumlaufende Wendel ausgebildet (siehe Figur 11), die die gleiche Ganghöhe haben, jedoch um eine halbe Ganghöhe in Axialrichtung versetzt auf dem Träger 11 angeordnet und somit zu dem Überzug 14 zusammengesetzt sind. Es sind somit zwei kongruente Wendeln oder Helices vorgesehen, die zusammen eine sogenannte zweigängige Schraube bilden. Zwischen den beiden Wendeln kann eine schraubenförmig um den Träger umlaufende Nut 18 vorgesehen sein.

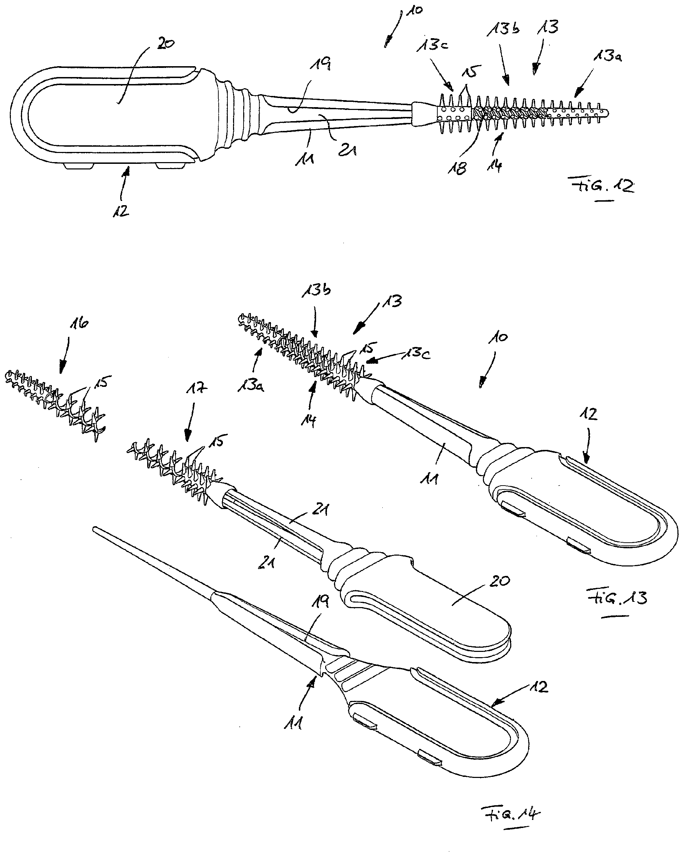

In den Figuren 12 bis 14 ist ein Ausführungsbeispiel gezeigt, bei dem das Reinigungsteil 13 mehrere in axialer Richtung des Trägers 11 hintereinanderliegende Reinigungsteilabschnitte 13a, 13b und 13c aufweist. Das 1. Überzugsteil 16 besitzt einen vorderen hülsenförmigen Abschnitt, an den sich in Richtung des Handgriffteils 12 ein wendeiförmiger Abschnitt anschließt. Das 2. Überzugsteil 16 besitzt einen rohrförmigen Hülsenabschnitt, an den sich in Richtung des vorderen Endes des Trägers 11 ein wendelförmiger Abschnitt anschließt. Wenn beide Überzugsteile 16 und 17 auf dem Träger fixiert sind (siehe Figur 12), bildet der hülsenförmige vordere Abschnitt des 1. Überzugteils 16 den vorderen Reinigungsteilabschnitt 13a. Der hintere hülsenabschnitt des 2. Überzugteils 17 bildet den hinteren Reinigungsteilabschnitt 13c. Der mittlere Reinigungsteilabschnitt 13b wird durch das Zusammenwirken der beiden wendelförmigen Abschnitte des 1. Überzugteils 16 und des 2. Überzugteils 17 gebildet, wobei die beiden wendelförmigen Bereiche der Überzugsteile 16, 17 in genannter Weise um eine halbe Ganghöhe der Wendeln versetzt zusammengesetzt sind.

## Patentansprüche

1. Interdentalreiniger (10) mit einem stabförmigen Träger (11) aus Kunststoff, einem mit dem Träger (11) verbundenen Handgriffteil (12) und einem Reinigungsteil (13), das einen auf dem Träger (11) angeordneten hülsenförmigen Überzug (14) aufweist, wobei der Überzug (14) radial nach außen hervorstehende Reinigungselemente (15) trägt, **dadurch gekennzeichnet, dass** der Überzug (14) aus mehreren Überzugsteilen (16, 17) besteht, wobei ein 1. Überzugsteil (16) aus einen 1. weich-elastischen Kunststoff besteht und wobei ein 2. Überzugsteil (17) aus einem 2. weich-elastischen Kunststoff oder aus einem thermoplastischen Kunststoff besteht, wobei das Kunststoff-Material des 1. Überzugsteils (16) unterschiedlich zu dem Kunststoff-Material des 2. Überzugsteils (17) ist.

2. Interdentalreiniger nach Anspruch 1, **dadurch gekennzeichnet, dass** das Kunststoff-Material des 1. Überzugsteils (16) und das Kunststoffmaterial des 2. Überzugsteils (17) unterschiedliche Shore-Härten besitzen.

3. Interdentalreiniger nach Anspruch 1 oder 2, **dadurch gekennzeichnet, dass** das Kunststoff-Material des 1. Überzugsteils (16) eine geringere Shore-Härte als das Kunststoff-Material des 2. Überzugsteils (17) aufweist.

4. Interdentalreiniger nach einem der Ansprüche 1 bis 3, **dadurch gekennzeichnet, dass** zwischen dem 1. Überzugsteil (16) und dem 2. Überzugsteil (17) eine Nut (18) ausgebildet ist.

5. Interdentalreiniger nach Anspruch 4, **dadurch gekennzeichnet, dass** die Nut (18) mit einem Zusatzstoff gefüllt ist.

6. Interdentalreiniger nach einem der Ansprüche 4 oder 5, **dadurch gekennzeichnet, dass** die Nut (18) eine Breite im Bereich von 0,05mm bis 1,0mm und insbesondere im Bereich von 0,1mm bis 0,5mm aufweist.

7. Interdentalreiniger nach einem der Ansprüche 1 bis 6, **dadurch gekennzeichnet, dass** das 1. Überzugsteil (16) im vorderen Endbereich des Trägers (11) angeordnet ist und dass das 2. Überzugsteil (17) relativ dazu in Richtung des Handgriffteils (12) axial versetzt auf dem Träger (11) angeordnet ist.

8. Interdentalreiniger nach einem der Ansprüche 1 bis 6, **dadurch gekennzeichnet, dass** das 1. Überzugsteil (16) und das 2. Überzugsteil (17) jeweils als eine Teilschale oder Halbschale ausgebildet sind.

9. Interdentalreiniger nach Anspruch 8, **dadurch gekennzeichnet, dass** das 1. Überzugsteil (16) eine Längsseite der axialen Länge des vorderen Abschnitts des Trägers (11) und das 2. Überzugsteil (17) eine dazu diametral entgegengesetzte Längsseite der axialen Länge des vorderen Abschnitts des Trägers (11) abdeckt.

10. Interdentalreingier nach einem der Ansprüche 1 bis 9, **dadurch gekennzeichnet, dass** das 1. Überzugsteil (16) im vorderen Endbereich des Trägers (11) eine Längsseite des Trägers (11) und in einem zum vorderen Endbereich in Richtung des Handgriffteils axial versetzten Bereich die diametrale entgegengesetzte Längsseite des Trägers (11) abdeckt und dass das 2. Überzugsteil (17) jeweils die zum 1. Überzugsteil (16) diametral entgegengesetzten Längsseiten des Trägers (11) abdeckt.

11. Interdentalreiniger nach einem der Ansprüche 1 bis 6, **dadurch gekennzeichnet, dass** das 1. Überzugsteil (16) und das 2. Überzugsteil (17) jeweils als eine um den Träger (12) herumlaufende Wendel ausgebildet sind.

12. Interdentalreiniger nach Anspruch 11, **dadurch gekennzeichnet, dass** die beiden Überzugsteile (16, 17) um eine halbe Ganghöhe der Wendel versetzt zusammengesetzt sind.

13. Interdentalreiniger nach einem der Ansprüche 1 bis 12, **dadurch gekennzeichnet, dass** das Reinigungsteil (13) mehrere in axialer Richtung des Trägers (11) hintereinanderliegende Reinigungsteilabschnitte (13a, 13b, 13c) aufweist.

14. Interdentalreiniger nach Anspruch 13, **dadurch gekennzeichnet, dass** ein 1. Reinigungsteilabschnitt (13a) von dem 1. Überzugsteil (16), ein 2. Reinigungsteilabschnitt (13b) von dem 1. Überzugsteil (16) und dem 2. Überzugsteil (17) und ein 3. Reinigungsteilabschnitt (13c) von dem 2. Überzugsteil (17) gebildet ist.

15. Interdentalreiniger nach Anspruch 14, **dadurch gekennzeichnet, dass** der 2. Reinigungsteilabschnitt (13b) von jeweils einem als eine um den Träger (11) herumlaufende Wendel ausgebildeten Bereich der beiden Überzugsteile (16, 17) gebildet ist, wobei die beiden wendelförmigen Bereiche der Überzugsteile (16, 17) um eine halbe Ganghöhe der Wendeln versetzt zusammengesetzt sind.

## Claims

1. Interdental cleaner (10) comprising a rod-shaped support (11) made of plastics material, a handle part (12) connected to the support (11), and a cleaning part (13), which has a sleeve-shaped cover (14) arranged on the support (11), the cover (14) supporting radially outwardly protruding cleaning elements (15), **characterized in that** the cover (14) consists of a plurality of cover parts (16, 17), a first cover part (16) consisting of a first soft-elastic plastics material and a second cover part (17) consisting of a second soft-elastic plastics material or a thermoplastics material, the plastics material of the first cover part (16) being different from the plastics material of the second cover part (17).

2. Interdental cleaner according to claim 1, **characterized in that** the plastics material of the first cover part (16) and the plastics material of the second cover part (17) have different Shore hardnesses.

3. Interdental cleaner according to claim 1 or 2, **characterized in that** the plastics material of the first cover part (16) has a lower Shore hardness than the plastics material of the second cover part (17).

4. Interdental cleaner according to any of claims 1 to 3, **characterized in that** a groove (18) is formed between the first cover part (16) and the second cover part (17) .

5. Interdental cleaner according to claim 4, **characterized in that** the groove (18) is filled with an additive.

6. Interdental cleaner according to any of claims 4 or 5, **characterized in that** the groove (18) has a width in the range of from 0.05 mm to 1.0 mm and in particular in the range of from 0.1 mm to 0.5 mm.

7. Interdental cleaner according to any of claims 1 to 6, **characterized in that** the first cover part (16) is arranged in the front end region of the support (11) and **in that** the second cover part (17) is arranged so as to be axially offset, relative thereto, on the support (11) in the direction of the handle part (12).

8. Interdental cleaner according to any of claims 1 to 6, **characterized in that** the first cover part (16) and the second cover part (17) are each designed as a partial shell or half shell.

9. Interdental cleaner according to claim 8, **characterized in that** the first cover part (16) covers a longitudinal side of the axial length of the front portion of the support (11) and the second cover part (17) covers a diametrically opposite longitudinal side of the axial length of the front portion of the support (11).

10. Interdental cleaner according to any of claims 1 to 9, **characterized in that** the first cover part (16) in the front end region of the support (11) covers a longitudinal side of the support (11) and, in a region axially offset from the front end region in the direction of the handle part, covers the diametrically opposite longitudinal side of the support (11), and **in that** the second cover part (17) covers the longitudinal sides of the support (11) diametrically opposite the first cover part (16).

11. Interdental cleaner according to any of claims 1 to 6, **characterized in that** the first cover part (16) and the second cover part (17) are each designed as a helix extending around the support (12).

12. Interdental cleaner according to claim 11, **characterized in that** the two cover parts (16, 17) are combined so as to be offset by half a pitch of the helix.

13. Interdental cleaner according to any of claims 1 to 12, **characterized in that** the cleaning part (13) comprises a plurality of cleaning-part portions (13a, 13b, 13c) lying one behind the other in the axial direction of the support (11).

14. Interdental cleaner according to claim 13, **characterized in that** a first cleaning-part portion (13a) is formed by the first cover part (16), a second cleaning-part portion (13b) is formed by the first cover part (16) and the second cover part (17), and a third cleaning-part portion (13c) is formed by the second cover part (17).

15. Interdental cleaner according to claim 14, **characterized in that** the second cleaning-part portion (13b) is formed in each case by a region of the two cover parts (16, 17) formed as a helix extending around the support (11), the two helical regions of the cover parts (16, 17) being combined so as to be offset by half a pitch of the helices.

## Revendications

1. Dispositif de nettoyage de l'espace interdentaire (10) avec un support (11) en forme de tige en plastique, une partie de manche (12) reliée au support (11) et avec une partie de nettoyage (13) qui comporte un revêtement (14) en forme de cosse disposé sur le support (11), le revêtement (14) supportant des éléments de nettoyage (15) saillant vers l'extérieur dans le plan radial, **caractérisé en ce que** le revêtement (14) se compose de plusieurs parties de revêtement (16, 17), une 1^{e} partie de revêtement (16) se composant d'un 1^{er} plastique élastique souple et une 2^{e} partie de revêtement (17) se composant d'un 2^{e} plastique élastique souple ou d'un plastique thermoplastique, le matériau plastique de la 1^{e} partie de revêtement (16) étant différent du matériau plastique de la 2^{e} partie de revêtement (17).

2. Dispositif de nettoyage de l'espace interdentaire selon la revendication 1, **caractérisé en ce que** le matériau plastique de la 1^{e} partie de revêtement (16) et le matériau plastique de la 2^{e} partie de revêtement (17) possèdent des duretés Shore différentes.

3. Dispositif de nettoyage de l'espace interdentaire selon la revendication 1 ou 2, **caractérisé en ce que** le matériau plastique de la 1^{e} partie de revêtement (16) présente une dureté Shore inférieure à celle du matériau plastique de la 2^{e} partie de revêtement (17).

4. Dispositif de nettoyage de l'espace interdentaire selon l'une quelconque des revendications 1 à 3, **caractérisé en ce qu'**une rainure (18) est réalisée entre la 1^{e} partie de revêtement (16) et la 2^{e} partie de revêtement (17).

5. Dispositif de nettoyage de l'espace interdentaire selon la revendication 4, **caractérisé en ce que** la rainure (18) est remplie d'une matière supplémentaire.

6. Dispositif de nettoyage de l'espace interdentaire selon l'une quelconque des revendications 4 ou 5, **caractérisé en ce que** la rainure (18) présente une largeur située dans la plage de 0,05 mm à 1,0 mm et notamment dans la plage de 0,1 mm à 0,5 mm.

7. Dispositif de nettoyage de l'espace interdentaire selon l'une quelconque des revendications 1 à 6, **caractérisé en ce que** la 1^{e} partie de revêtement (16) est disposée dans la région d'extrémité avant du support (11) et que la 2^{e} partie de revêtement (17) est disposée sur le support (11), de façon relativement décalée dans le plan axial, en direction de la partie de manche (12).

8. Dispositif de nettoyage de l'espace interdentaire selon l'une quelconque des revendications 1 à 6, **caractérisé en ce que** la 1^{e} partie de revêtement (16) et la 2^{e} partie de revêtement (17) sont respectivement réalisées sous la forme d'une coque partielle ou d'une demi-coque.

9. Dispositif de nettoyage de l'espace interdentaire selon la revendication 8, **caractérisé en ce que** la 1^{e} partie de revêtement (16) recouvre un côté longitudinal de la longueur axiale de la section avant du support (11) et que la 2^{e} partie de revêtement (17) recouvre un côté longitudinal, relativement diamétralement opposé, de la longueur axiale de la section avant du support (11).

10. Dispositif de nettoyage de l'espace interdentaire selon l'une quelconque des revendications 1 à 9, **caractérisé en ce que** la 1^{e} partie de revêtement (16) recouvre dans la zone d'extrémité avant du support (11) un côté longitudinal du support (11) et dans une zone décalée dans le plan axial par rapport à la zone d'extrémité avant, en direction de la partie de manche, le côté longitudinal diamétralement opposé du support (11) et que la 2^{e} partie de revêtement (17) recouvre respectivement les côtés longitudinaux, diamétralement opposés à la 1^{e} partie de revêtement (16), du support (11).

11. Dispositif de nettoyage de l'espace interdentaire selon l'une quelconque des revendications 1 à 6, **caractérisé en ce que** la 1^{e} partie de revêtement (16) et la 2^{e} partie de revêtement (17) sont respectivement réalisées sous la forme d'une spirale circulant autour du support (12).

12. Dispositif de nettoyage de l'espace interdentaire selon la revendication 11, **caractérisé en ce que** les deux parties de revêtement (16, 17) sont composées de façon décalée d'un demi-pas de la spirale.

13. Dispositif de nettoyage de l'espace interdentaire selon l'une quelconque des revendications 1 à 12, **caractérisé en ce que** la partie de nettoyage (13) comporte plusieurs sections partielles de nettoyage (13a, 13b, 13c) placées les unes derrière les autres dans la direction axiale du support (11).

14. Dispositif de nettoyage de l'espace interdentaire selon la revendication 13, **caractérisé en ce qu'**une 1^{e} section partielle de nettoyage (13a) est formée par la 1^{e} partie de revêtement (16), qu'une 2^{e} section partielle de nettoyage (13b) est formée par la 1^{e} partie de revêtement (16) et la 2^{e} partie de revêtement (17) et qu'une 3^{e} section partielle de nettoyage (13c) est formée par la 2^{e} partie de revêtement (17).

15. Dispositif de nettoyage de l'espace interdentaire selon la revendication 14, **caractérisé en ce que** la 2^{e} section partielle de nettoyage (13b) est respectivement formée par une zone, réalisée sous la forme d'une spirale circulant autour du support (11), des deux parties de revêtement (16, 17), les deux zones en forme de spirale des parties de revêtement (16, 17) étant composées de façon décalée d'un demi-pas des spirales.
